# EUROPÄISCHE PATENTSCHRIFT

(11) **EP 2 696 040 B1**
(45) Veröffentlichungstag und Bekanntmachung des Hinweises auf die Patenterteilung: **15.03.2017**
(21) Anmeldenummer: 12179768.2
(22) Anmeldetag: 09.08.2012
(51) Int. Cl.: F02C 7/18, F01D 25/14, F01D 11/24, F01D 25/12, F02K 3/06, F02K 3/075

(54) **Strömungsleitanordnung zur Kühlung des Niederdruckturbinengehäuses eines Gasturbinenstrahltriebwerk**
Flow guidance device for cooling the low pressure turbine casing of a gas turbine engine
Agencement conducteur de courant destiné au refroidissement du carter de turbines à basse pression d'un moteur à réaction à turbine à gaz

(43) Veröffentlichungstag der Anmeldung: 12.02.2014
(73) Patentinhaber: MTU Aero Engines AG, 80995 München (DE)
(72) Erfinder: Feldmann, Manfred, 82223 Eichenau (DE); Schinko, Norbert, 81373 München (DE); Eichler, Christian, 81245 München (DE)

(56) Entgegenhaltungen:
- EP-A2- 1 004 759
- WO-A1-92/11444
- GB-A- 2 078 859
- US-A- 3 975 901

## Beschreibung

### HINTERGRUND DER ERFINDUNG

### GEBIET DER ERFINDUNG

Die vorliegende Erfindung betrifft ein Gasturbinenstrahltriebwerk mit einem Hauptströmungskanal und eine diesen Hauptströmungskanal radial umgebende Gehäusestruktur, in der ein Gehäusegasstrom in der gleichen Richtung wie die Hauptströmung im Hauptströmungskanal strömt.

### STAND DER TECHNIK

Bei Gasturbinenstrahltriebwerken müssen Gehäusekomponenten gekühlt werden, um die Gehäusekomponenten auf eine für das Gehäuse verträgliche Temperatur zu bringen, da das Gehäuse durch die Verbrennungvorgänge in der Brennkammer und die daraus resultierenden heißen Verbrennungsgase mit hohen Temperaturen belastet wird. Darüber hinaus wird die Kühlung der Gehäusekomponenten auch dazu verwendet, um beispielsweise die Größe der Spalten zwischen den Turbinenlaufschaufeln der Niederdruckturbine und einer an einer Gehäusestruktur angeordneten Dichtstruktur, der sogenannten "outer air seal", einzustellen. Die Einstellung dieses Spalts zwischen den Turbinenlaufschaufeln und der Dichtstruktur am Gehäuse beeinflusst den Wirkungsgrad der Niederdruckturbine und ist je nach Belastung des Gasturbinenstrahltriebwerks unterschiedlich, da sich bei unterschiedlicher Belastung des Triebwerks die Temperaturen und die auftretenden Fliehkräfte bei den Turbinenschaufeln und somit die entsprechenden Dimensionen verändern können. Aus diesem Grund ist es bereits bekannt, eine aktive Radialspaltkontrolle, eine sogenannte "active clearance control (ACC)", einzusetzen, bei der bei einem Gasturbinenstrahltriebwerk in Mehrwellen-Zweistrombauweise aus einem Nebenstrom oder Sekundärstrom, der durch ein Frontgebläse bzw. einen Fan erzeugt wird, Kühlluft entnommen wird, welche durch entsprechende Leitungen und Öffnungen in der Gehäusestruktur zwischen Nebenstrom und Hauptstrom auf die an dem Hauptstrom angeordnete Innenwand der Gehäusestruktur im Bereich der Niederdruckturbine gerichtet wird.

So zeigt die DE 35 409 43 A1 ein in Fig. 1 dargestelltes Gasturbinenstrahltriebwerk, das der Reihe nach - von links nach rechts - aus einem Frontgebläse 1, einem Hochdruckverdichter 2, einer Ringbrennkammer 3 sowie einer Hochdruckverdichterantriebsturbine 4 besteht, der eine Niederdruckturbine 5 zum Antrieb des Frontgebläses 1 aero-thermodynamisch nachgeschaltet ist.

Dabei ist das Frontgebläse 1 mit der Niederdruckturbine 5 über ein gemeinsames inneres Rotorsystem 6 gekoppelt. Beim Hochdruck- oder Gaserzeugerteil sind der Hochdruckverdichter 2 und die zugehörige Verdichterantriebsturbine 4 über ein gemeinsames Rotorsystem 7 miteinander gekoppelt. Das Rotorsystem 7 ummantelt dabei in koaxialer Bauweise einen Teil des Rotorsystems 6. Der wesentliche Teil des vom Frontgebläse 1 geförderten Luftstroms (Mantel- oder Sekundärluftstrom S) wird zur Vortriebsschuberzeugung in den Sekundärkanal 8 des Triebwerks gefördert, ein übriger Teil S' des vom Frontgebläse 1 geförderten Luftstroms gelangt zum Hochdruckverdichter 2 des Gaserzeugers. Der aus der Niederdruckturbine 5 entweichende Heißgasstrom wird ebenfalls zur Vortriebsschuberzeugung genutzt.

Normalerweise müssen bei einem derartigen Triebwerk wesentliche Turbinenkomponenten zwecks Beherrschung der Heißgastemperaturen gekühlt werden. Es wären also beispielsweise die Eintrittsleitschaufeln der Hochdruckturbine 4 kühlbar, ferner beispielsweise die Laufschaufeln der Hochdruckturbine 4 wie gegebenenfalls aber auch z.B. die Leitschaufeln der zweiten Stufe der Hochdruckturbine 4. Die für die genannten Kühlungsfälle der Hochdruckturbine 4 zu verwendende Verdichterluft kann an einer oder mehreren geeigneten Stellen aus dem Hochdruckverdichter 2 entnommen werden und z. B. über das betreffende innere Rotorsystem dem entsprechenden Verwendungszweck zugeführt werden. Es ist bekannt, die betreffenden ringförmigen Gehäusestrukturen 9 bzw. 10 von Hochdruck- und Niederdruckturbine 4 bzw. 5 über verhältnismäßig aufwendige und komplizierte Rohrverteilersysteme mit Kühlluft zu beaufschlagen, die aus dem Sekundärkanal des Triebwerks entnommen wird.

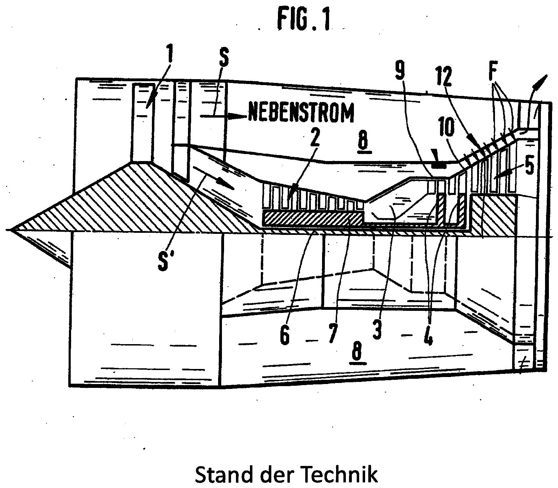

Bei dem Triebwerk der Fig. 1 wird weiterhin zur Turbinenbauteilkühlung und Schaufelspaltoptimierung ein vom Nebenstrom abgezogener Sekundärluftanteil über in unmittelbarer Nähe der betreffenden Turbinengehäusestruktur (hier z.B. der Niederdruckturbine 5) angeordnete Öffnungen 11 in der Wand 12 des Sekundärkanals 8 aus dem Sekundärstrom entnommen und im Wege einer Aufprallkühlung (Pfeile F) gegen die Turbinengehäusestruktur 10 ausgeblasen. Ähnliche Lösungen sind auch aus der WO 92/11444 A1 und der GB 2078 859 A bekannt.

Allerdings kommt es durch die Entnahme von Luft aus dem Nebenstrom zu Wirkungsgradverlusten. Darüber hinaus werden zusätzliche Rohrleitungen benötigt, um die Luft aus dem Nebenstrom an das Niederdruckturbinengehäuse zu fuhren. Dies hat wiederum zur Folge, dass das Triebwerk ein höheres Gewicht aufweist.

Aus der US 3 975 901 A ist eine Konstruktion bekannt, bei der ein kühlerer Luftstrom durch das den Hauptstroinkanal umgebende Gehäuse fließt und mit aus dem Hauptstromkanal abgezweigter heißer Luft durch einen Hitze gesteuerten, automatischen Schieber vermischt wird, um eine geeignete Kühlung zu erreichen. Dabei kommt es durch die Entnahme von Luft aus dem Hauptstrom ebenfalls zu Wirkungsgradverlusten.

### OFFENBARUNG DER ERFINDUNG

### AUFGABE DER ERFINDUNG

Es ist deshalb Aufgabe der vorliegenden Erfindung, eine Möglichkeit zur Kühlung von Gehäusestrukturen und insbesondere des Niederdruckturbinengehäuses eines Gasturbinenstrahltriebwerks vorzusehen, welches die Nachteile des Standes der Technik nicht aufweist oder diese zumindest verringert. Insbesondere soll in einfacher Weise eine effektive Kühlung von Gehäusebereichen am Hauptströmungskanal und insbesondere des Niederdruckturbinengehäuses ermöglicht werden.

### TECHNISCHE LÖSUNG

Diese Aufgabe wird gelöst durch ein Gasturbinenstrahltriebwerk mit den Merkmalen des Anspruchs 1. Vorteilhafte Ausgestaltungen sind Gegenstand der abhängigen Ansprüche,

Der vorliegenden Erfindung liegt die Idee zu Grunde, dass zur Kühlung der Gehäusebereiche am Hauptströmungskanal eines Gasturbinenstrahltriebwerks und insbesondere eines Niederdruckturbinengehäuses auch ein so genannter Gehausegasstrom bzw. "vent flow" in der den Hauptströmungskanal umgebenden Gehäusestruktur genutzt werden kann, wenn eine Strömungsleitanordnung vorgesehen wird, mit der der Fluss des Gehäusegasstroms zum und/oder entlang des Hauptströmungskanals eingestellt werden kann, sodass die bereits in der Gehäusestruktur befindliche Luft bzw. Gasströmung kontrolliert wird und dazu genutzt wird, entsprechende Bereiche der Gehäusestruktur, wie beispielsweise die an dem Hauptströmungskanal anliegenden Wandbereiche, vorzugsweise des Niederdruckturbinengehäuses, zu kühlen. Entsprechend kann auf die separate Entnahme von Kühlluft aus dem Nebenstrom bzw. Sekundärstrom verzichtet werden, was eine Wirkungsgradverbesserung zur Folge hat. Außerdem müssen keine aufwendigen Leitungen zur Führung der Kühlluft aus dem Nebenstrom vorgesehen werden.

Die Strömungsleitanordnung kann hierbei zumindest ein Strömungsleitblech umfassen, welches den Gehäusegasstrom in mindestens zwei Teilströme aufteilt, sodass ein Teilstrom nahe dem Hauptströmungskanal in der Gehäusestruktur geführt werden kann und der andere Teilstrom entfernt vom Hauptströmungskanal in der Gehäusestruktur verläuft. Auf diese Weise ist es möglich, durch gezielte Aufteilung des Gehäusegasstroms in mindestens zwei oder mehrere Teilströme, die in unterschiedlichen Bereichen der Gehäusestruktur geführt werden, eine entsprechende Kühlwirkung an den gewünschten Stellen der Gehäusestruktur zu erzielen.

Dazu können die Teilstromkanäle verschließbar und/oder drosselbar ausgebildet sein, sodass die Strömungsgeschwindigkeit in den Teilstromkanälen veränderbar ist und/oder bei einem Verschließen gar kein Gehäusegasstrom im Teilstromkanal geführt wird.

Zusätzlich oder alternativ kann das Strömungsleitblech zur variablen Einstellung der Teilströme verstellbar ausgebildet sein, und/oder mehrere variabel verschließbare Öffnungen aufweisen, sodass neben der Variation der Strömungsgeschwindigkeit in den Teilstromkanälen auch die Menge des Gasstroms durch die Teilstromkanäle einstellbar ist. Auch dadurch kann die entsprechende Kühlwirkung beeinflusst werden.

Die Strömungsleitanordnung kann zur Einstellung des Gasstroms und/oder zum Verschließen von Öffnungen Ventile und/oder Drosselklappen aufweisen.

Die Gehäusegasströmung kann mittels der Strömungsleitanordnung so gesteuert und/oder geregelt werden, dass unterschiedliche Kühlwirkungen an bestimmten Stellen der Gehäusestruktur erzielt werden können. Dazu kann eine Steuerung und/oder Regelung vorgesehen sein, die die verschiedenen Komponenten der Strömungsleitanordnung, wie beispielsweise Ventile, Drosselklappen, Strömungsleitbleche und dergleichen in ihren Einstellungen steuern kann.

Durch Rückkopplung von ermittelten Parametern, wie beispielsweise von Temperaturen in bestimmten Bereichen der Gehäusestruktur, kann eine Regelung verwirklicht werden, mit der automatisiert die Gehäusegasströmung so aufgeteilt und/oder verteilt wird, dass die gewünschte Kühlwirkung und insbesondere die Einstellung eines gewünschten Radialspalts zwischen den Turbinenschaufeln der Niederdruckturbine und dem Niederdruckturbinengehäuse bzw. einer daran angeordneten Dichtstruktur eingestellt wird.

Die vorliegende Erfindung mit einer Strömungsleitanordnung in einer Gehäusestruktur, die einen Hauptströmungskanal umgibt, kann sowohl bei Gasturbinenstrahltriebwerken in Zweistrombauweise als auch in Einstrombauweise verwirklicht werden, also mit oder ohne Nebenkanal.

### KURZBESCHREIBUNG DER FIGUREN

Die beigefügten Zeichnungen zeigen in rein schematischer Weise in
- Fig.1: einen teilweisen Axialschnitt eines Gasturbinenstrahltriebwerks nach dem Stand der Technik;
- Fig.2: eine teilweise Schnittansicht eines erfindungsgemäßen Gasturbinenstrahltriebwerks; und in
- Fig.3: eine Schnittansicht durch ein weiteres Ausführungsbeispiel eines erfindungsgemäßen Gasturbinenstrahltriebwerks.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich werden. Allerdings ist die Erfindung nicht auf diese Ausführungsbeispiele beschränkt.

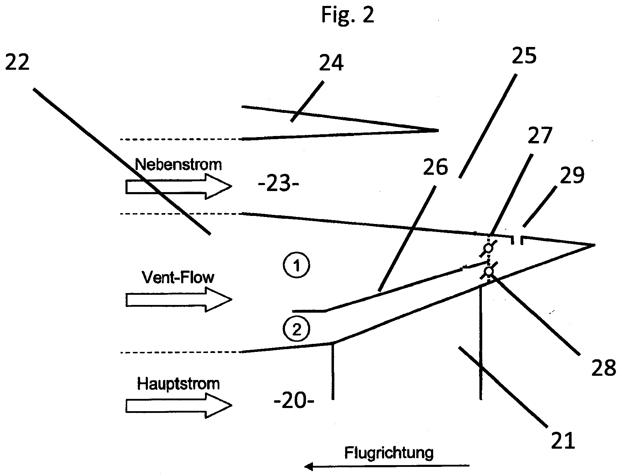

Die Figur 2 zeigt einen teilweisen Axialschnitt durch ein erfindungsgemäßes Gasturbinenstrahltriebwerk im Bereich der Niederdruckturbine 21. Der Hauptströmungskanal 20, in dem die Verbrennungsgase in Richtung der Niederdruckturbine 21 strömen, ist nur teilweise dargestellt.

Der Hauptströmungskanal 20 ist koaxial von einer Gehäusestruktur 22 umgeben, die den Hauptströmungskanal begrenzt. Darüber hinaus weist das in Figur 2 teilweise dargestellte Gasturbinenstrahltriebwerk ähnlich dem Gasturbinenstrahltriebwerk der Figur 1 einen Nebenstromkanal 23 auf, in welchem ein von einem Frontgebläse erzeugter Luftstrom zur Vortriebsschuberzeugung strömt. Der Nebenstromkanal 23 wird einerseits durch die Gehäusestruktur 22 und andererseits durch ein Außengehäuse 24 begrenzt.

In der Gehäusestruktur 22, die sich zwischen dem Hauptstromkanal 20 und dem Nebenstromkanal 23 befindet, fließt eine sogenannte Gehäusegasströmung, die im Englischen auch als "vent flow" bezeichnet wird und die entsprechend spezifischen Belüftungsanforderungen der Gehäusestruktur 22 immer vorliegt.

Wie die Figur 2 zeigt, weist die Gehäusestruktur 22 im Bereich der Niederdruckturbine eine Strömungsleitanordnung 25 auf, die im Wesentlichen ein Strömungsleitblech 26 und Drosselklappen bzw. Ventile 27, 28 umfasst.

Mittels des Strömungsleitblechs 26 wird der Gehäusegasstrom in zwei Teilströme aufgeteilt und zwar einen Teilstrom, der in der Nähe des Hauptstromkanals 20 verläuft und einen Teilstrom, der entfernt vom Hauptstromkanal 20 verläuft.

Das Strömungsleitblech 26 ist verstellbar, und zwar beispielsweise verschwenkbar, verkippbar oder verschiebbar, sodass der Strömungsquerschnitt für die Teilströme des Gehäusegasstroms unterschiedlich eingestellt werden kann. Auf diese Weise lässt sich die Gasmasse, die in dem einen Teilstrom oder dem anderen Teilstrom fließt, einstellen und damit den Wärmeübergang beeinflussen. Durch die unterschiedlichen Strömungsverhältnisse lassen sich auch die Kühleinstellungen für die Außenwand des Hauptströmungskanals 20 bzw. die darin angeordneten Bauteile, also beispielsweise die Niederdruckturbine 21, einstellen. Durch die entsprechende Einstellung der Kühlung über die Aufteilung des Gehäusegasstroms kann auch eine Einstellung eines Spaltes zwischen den Niederdruckturbinenlaufschaufeln und einem an der Gehäusestruktur 22 vorgesehenen Dichtstruktur bzw. Einlaufbelag (nicht dargestellt) eingestellt werden.

Das Strömungsleitblech 26 kann auch fest angeordnet sein, wobei dann die Drosselklappen oder Ventile 27, 28 den Durchfluss beeinflussen bzw. durch deren Verstellung der Durchfluss hinsichtlich der Fließgeschwindigkeit eingestellt werden kann.

Durch die Drosselung der Teilströme bzw. Verschließen der einzelnen Teilstromkanäle über die Drosselklappen bzw. Ventile 27 und 28, lassen sich einzelne Teilstromkanäle auch komplett abschließen. Der Gehäusegasstrom verlässt nach Durchlaufen der Teilstromkanäle über die Öffnung 29 die Gehäusestruktur 22 in Richtung Nebenstrom 23.

Im Zusammenhang mit der Strömungsleitanordnung 25 kann eine Steuerung und/oder Regelung vorgesehen sein, die mittels erfasster Parameter, wie beispielsweise Temperaturen an der Gehäusestruktur 22, die Einstellung der Strömungsleitanordnung vornimmt, um die gewünschte Kühlwirkung zu bewirken.

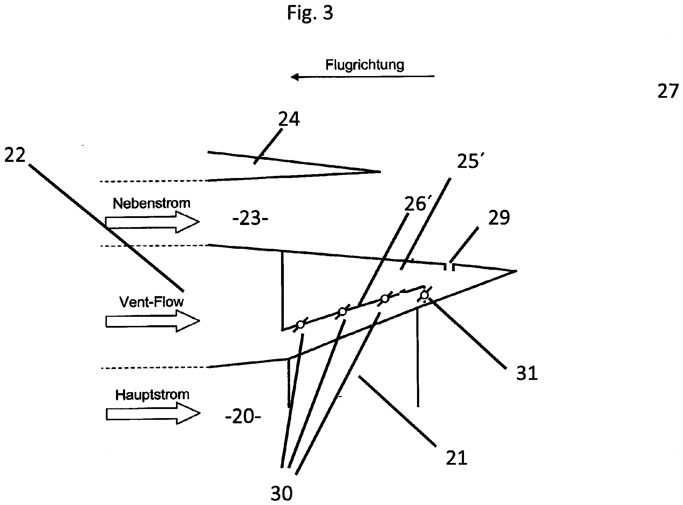

Die Figur 3 zeigt eine weitere Ausführungsform eines Gasturbinenstrahltriebwerks gemäß der vorliegenden Erfindung, wobei identische oder vergleichbare Komponenten mit gleichen Bezugszeichen versehen sind, wie in Figur 2. Entsprechend wird auch auf eine erneute Beschreibung dieser Komponenten verzichtet.

Die in der Ausführungsform der Figur 3 vorgesehene Strömungsleitanordnung 25' unterscheidet sich von der Strömungsleitanordnung 25 der Ausführungsform der Figur 2 dahingehend, dass das dort vorgesehene Strömungsleitblech 26' nicht verstellbar ist, jedoch mehrere Öffnungen 30 mit Ventilen und /oder Drosselklappen aufweist, sodass aus dem von dem Strömungsleitblech 26' begrenzten Strömungskanal für den Gehäusegasstrom je nach Einstellung der Drosselklappen und/oder Ventile in den Öffnungen 30 mehr oder weniger Gasstrom entweichen kann, sodass durch den Grad der Entweichung und/oder die Strömungsgeschwindigkeit im Strömungskanal die Kühlwirkung an der Niederdruckturbine 21 eingestellt werden kann. Hierzu dient auch eine Drosselklappe bzw. ein Ventil 31 an der Ausgangsöffnung des durch das Strömungsleitblech 26' begrenzten Strömungskanals. Der Gehäusegasstrom verlässt wiederum wie bei der Ausführungsform der Figur 2 durch die Öffnung 29 der Gehäusestruktur 22 die Gehäusestruktur 22.

Auch bei der Ausführungsform der Figur 3 kann somit mit einer entsprechenden Steuerungs- /oder Regelungseinrichtung die Kühlung der Außenwand des Hauptströmungskanals 20 und insbesondere des Bereichs der Niederdruckturbine eingestellt und somit die Einstellung eines Spalts zwischen den Laufschaufeln der Niederdruckturbine und einer Dichtstruktur, dem sogenannten "outer air seal", vorgenommen werden.

Obwohl die vorliegende Erfindung anhand der Ausführungsbeispiele detailliert beschreiben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden, solange der Schutzbereich der beigefügten Ansprüche nicht verlassen wird.

## Patentansprüche

1. Gasturbinenstrahltriebwerk mit einem Hauptströmungskanal (20) und eine diesen Hauptströmungskanal radial umgebende Gehäusestruktur (22), in der ein Gehäusegasstrom in der gleichen Richtung wie die Hauptströmung im Hauptströmungskanal strömt, wobei die Gehäusestruktur eine einstellbare Strömungsleitanordnung (25, 25') aufweist, mit der der Fluss des Gehäusegasstroms zum und/oder entlang des Hauptströmungskanals eingestellt werden kann, wobei die Strömungsleitanordnung (25) mindestens ein Strömungsleitblech (26) umfasst, welches den Gehäusegasstrom in mindestens zwei Teilströme unterteilt, wobei ein Teilstrom nahe dem Hauptströmungskanal und ein anderer Teilstrom entfernt vom Hauptströmungskanal verläuft und **dadurch gekennzeichnet, dass** das Strömungsleitblech (26, 26) zur variablen Einstellung von Teilströmen verstellbar ausgebildet ist und/oder variabel verschließbare Öffnungen aufweist.

2. Gasturbinenstrahltriebwerk nach Anspruch 2,
**dadurch gekennzeichnet, dass**
die Teilstromkanäle verschließbare und/oder drosselbar ausgebildet sind.

3. Gasturbinenstrahltriebwerk nach einem der vorhergehenden Ansprüche,
**dadurch gekennzeichnet, dass**
die Strömungsleitanordnung (25, 25') Ventile und/oder Drosselklappen zum Verschließen von Öffnungen und/oder Einstellen des Gasstroms aufweist.

4. Gasturbinenstrahltriebwerk nach einem der vorhergehenden Ansprüche,
**dadurch gekennzeichnet, dass**
eine Steuerung und/oder Regelung vorgesehen ist, welche die Gehäusegasströmung mittels der Strömungsleitanordnung steuert und/oder regelt.

5. Gasturbinenstrahltriebwerk nach einem der vorhergehenden Ansprüche,
**dadurch gekennzeichnet, dass**
die Luftleitanordnung im Bereich der Niederdruckturbine (21) angeordnet ist.

6. Gasturbinenstrahltriebwerk nach einem der vorhergehenden Ansprüche,
**dadurch gekennzeichnet, dass**
das Gasturbinenstrahltriebwerk einen radial außen liegenden Nebenstromkanal (23) mit einem Außengehäuse (24) aufweist, so dass die Gehäusestruktur mit der Strömungsleitanordnung zwischen Nebenstromkanal und Hauptstromkanal angeordnet ist.

## Claims

1. A gas turbine propulsion unit with a main flow channel (20) and a housing structure (22) which radially surrounds said main flow channel and in which a housing gas stream flows into the main flow channel in the same direction as the main flow, wherein the housing structure has an adjustable flow conducting assembly (25, 25'), with which the flow of the housing gas stream to and/or along the main flow channel can be adjusted,
wherein the flow conducting assembly (25) has at least one flow deflector plate (26), which divides the housing gas stream into at least two partial streams, wherein one partial stream runs close to the main flow channel and another partial stream runs at a distance from the main flow channel, **characterized in that**
the flow deflector plate (26, 26') is configured to be adjustable in order to variably adjust partial streams and/or has variably closeable openings.

2. The gas turbine propulsion unit according to claim 2,
**characterized in that**
the partial stream channels are configured such that they can be closed and/or throttled.

3. The gas turbine propulsion unit according to one of the preceding claims,
**characterized in that**
the flow conducting assembly (25, 25') has valves and/or throttle dampers to close openings and/or to adjust the gas stream.

4. The gas turbine propulsion unit according to one of the preceding claims,
**characterized in that**
control and/or regulation means are provided in order to control and/or regulate the housing gas flow by means of the flow conducting assembly.

5. The gas turbine propulsion unit according to one of the preceding claims,
**characterized in that**
the air guide arrangement is arranged in the vicinity of the low-pressure turbine (21).

6. The gas turbine propulsion unit according to one of the preceding claims,
**characterized in that**
the gas turbine propulsion unit has a secondary flow channel (23) with an outer housing (24), and so the housing structure with the flow conducting assembly is arranged between the secondary flow channel and the main flow channel.

## Revendications

1. Moteur à réaction à turbine à gaz avec un canal de courant principal (20) et une structure de carter (22) entourant radialement ce canal de courant principal, dans laquelle un courant de gaz de carter s'écoule dans la même direction que le courant principal dans le canal de courant principal, dans lequel la structure de carter présente un agencement conducteur de courant réglable (25, 25'), avec lequel le flux du courant de gaz de carter peut être réglé vers et/ou le long du canal de courant principal,
dans lequel l'agencement conducteur de courant (25) comprend au moins une tôle conductrice de courant (26), laquelle divise le courant de gaz de carter en au moins deux courants partiels, dans lequel un courant partiel s'étend à proximité du canal de courant principal et un autre courant partiel s'étend à distance du canal de courant principal et **caractérisé en ce que**
la tôle conductrice de courant (26, 26') est réalisée de minière réglable pour le réglage variable de courants partiels et/ou présente des ouvertures pouvant être fermées de façon variable.

2. Moteur à réaction à turbine à gaz selon la revendication 2,
**caractérisé en ce que**
les canaux de courant partiel sont réalisés de manière à pouvoir être fermés et/ou de manière à pouvoir être étranglés.

3. Moteur à réaction à turbine à gaz selon l'une quelconque des revendications précédentes,
**caractérisé en ce que**
l'agencement conducteur de courant (25, 25') présente des soupapes et/ou papillons pour fermer des ouvertures et/ou régler le courant de gaz.

4. Moteur à rédaction à turbine à gaz selon l'une quelconque des revendications précédentes,
**caractérisé en ce que**
une commande et/ou régulation est prévue, laquelle commande et/ou régule le courant de gaz de carter au moyen de l'agencement conducteur de courant.

5. Moteur à réaction à turbine à gaz selon l'une quelconque des revendications précédentes,
**caractérisé en ce que**
l'agencement conducteur d'air est agencé au niveau de la turbine à basse pression (21).

6. Moteur à réaction à turbine à gaz selon l'une quelconque des revendications précédentes,
**caractérisé en ce que**
le moteur à réaction à turbine à gaz présente un canal de courant secondaire situé radialement à l'extérieur (23) avec un carter extérieur (24), de façon à ce que la structure de carter avec l'agencement conducteur de courant soit agencée entre le canal de courant secondaire et le canal de courant principal.
